Europäisches Patentamt

(19) European Patent Office

Office européen des brevets

(11) Numéro de publication: **0 132 208**
A1

(12) **DEMANDE DE BREVET EUROPEEN**

(21) Numéro de dépôt: **84420098.0**

(22) Date de dépôt: **07.06.84**

(51) Int. Cl.⁴: **H 02 G 7/05**
**F 16 G 11/04**

(30) Priorité: **15.06.83 FR 8310270**

(43) Date de publication de la demande:
**23.01.85 Bulletin 85/4**

(84) Etats contractants désignés:
**AT BE CH DE GB IT LI LU NL SE**

(71) Demandeur: **MALICO : Société Anonyme**
**Zone Industrielle de l'Argentiére 9-11, rue Baptiste Marcet**
**F-38600 Fontaine(FR)**

(72) Inventeur: **Lienart, Jean-Pierre Fernand**
**Saint Nizier D'Uriage**
**F-38410 Uriage(FR)**

(74) Mandataire: **Maureau, Pierre et al,**
**Cabinet GERMAIN & MAUREAU B.P. 3011**
**F-69392 Lyon Cedex 03(FR)**

(54) **Pince d'ancrage pour câbles porteurs isolés à plusieurs conducteurs.**

(57) La présente invention concerne une pince pour l'ancrage de câbles porteurs isolés à plusieurs conducteurs de lignes aériennes électriques.

Cette pince comprend un corps (2) de section en forme générale de U, délimitant un évidement conique (2a), un coin central (4) à pente forte présentant, dans deux faces opposées, deux paires de gorges (4a), dont chacune est apte à loger l'un des conducteurs (5) du câble et un manchon intermédiaire conique (3) de section en forme de U présentant, intérieurement, une pente forte (3b) complémentaire de celle du coin, extérieurement, une pente faible (3a) complémentaire de celle du corps (2) et, dans sa paroi de fond, une rainure intérieure longitudinale (3e).

Application aux pinces d'ancrage pour câbles de lignes aériennes.

FIG.1

1

## "Pince d'ancrage pour câbles porteurs isolés à plusieurs conducteurs".

La présente invention a pour objet une pince d'ancrage pour câbles porteurs isolés à plusieurs conducteurs de lignes aériennes électriques.

Ce genre de lignes comporte généralement quatre conducteurs. Actuellement, un type de pince connu pour l'ancrage de telles lignes comprend un noyau conique formé de deux éléments entre lesquels sont ménagées quatre gorges dont chacune est apte à loger l'un des conducteurs du câble et destiné à être engagé dans l'évidement conique d'un support qui assure, par coincement, le centrage des deux éléments du noyau.

Un autre type de pince comprend un noyau conique monobloc comportant sur deux faces opposées deux paires de gorges, dont chacune est apte à loger un des conducteurs du câble, et destiné à être engagé dans une pièce de section en forme de U et délimitant un évidement conique.

Dans un autre type de pince encore, un noyau cylindrique comporte quatre gorges dans lesquelles sont engagés les conducteurs du câble ; après avoir été placé sur ces câbles, ce noyau est placé à l'intérieur d'une pièce conique dans laquelle il est coincé par coulissement d'un organe conique.

Ces différents types de pince utilisent tous des coins coniques (constitués soit par le noyau conique, soit par un organe conique intermédiaire), dont le coulissement dans un corps conique assure le coincement des conducteurs du câble.

Tous ces coins présentent, cependant, l'inconvénient de ne pouvoir être adaptés facilement à toute une gamme de câbles de sections différentes. En effet, du fait de leur faible pente, nécessaire à un bon coincement, ces coins devraient être exagérément longs pour pouvoir s'adapter à différentes sections de câbles.

Par contre, une forte pente de coin, si elle permet une adaptation à différents diamètres de câbles, ne permettrait pas d'obtenir un bon coincement.

Le but de la présente invention est donc de réaliser une pince du type de celles décrites plus haut, mais pouvant s'adapter à différentes sections de câbles, tout en assurant un bon serrage de ceux-ci.

A cet effet, la pince selon l'invention, qui est du type comprenant un corps de section en forme générale de U et délimitant un évidement conique comporte, d'une part, un coin central à pente forte présentant, dans deux faces opposées, deux paires de gorges, dont chacune est apte à loger l'un des conducteurs du câble, et, d'autre part, un manchon intermédiaire conique, de section en forme générale de U, ayant intérieurement une pente forte complémentaire de celle du coin, et extérieurement une pente faible complémentaire de celle du corps, et présentant, dans sa paroi de fond, une rainure intérieure longitudinale.

Pour le montage de la pince d'ancrage, le coin central est d'abord introduit dans la torsade du câble et les conducteurs mis en place dans les gorges qu'il présente, le tout est ensuite introduit dans le manchon intermédiaire, puis dans le corps, avec compression du manchon dans ce corps. Cette compression est autorisée par la déformation de la rainure longitudinale et rapprochement des deux ailes coniques du manchon intermédiaire. Le serrage s'effectue donc par les pentes faibles complémentaires du corps et du manchon intermédiaire et permet ainsi de supporter des efforts importants.

En outre, la pince présente une pente forte, nécessaire à une adaptation facile de la pince à plusieurs diamètres de câbles, sans augmenter de façon abusive la longueur du coin, puisqu'à une variation importante du diamètre des conducteurs du câble correspond un faible déplacement du coin.

Selon une forme intéressante de réalisation, le manchon intermédiaire porte une languette extérieure brisable, limitant provisoirement son enfoncement dans le corps pour permettre l'engagement correct du coin dans le manchon intermédiaire. Le bris de cette languette autorise ensuite l'enfoncement du manchon intermédiaire dans le corps, de façon à effectuer le coincement et le serrage des conducteurs du câble.

Selon une autre forme de réalisation, le manchon présente, dans les deux faces intérieures des ailes du U, deux paires de gorges complémentaires et en regard de celles du coin central. Ces gorges coopèrent avec celles du coin central pour assurer un bon maintien des conducteurs du câble.

De toute façon, l'invention sera mieux comprise à l'aide de la description qui suit, en référence au dessin schématique annexé représentant, à titre d'exemple non limitatif, une forme d'exécution de la présente invention :

Figure 1 est une vue en perspective de la pince suivant l'invention, après mise en place des câbles ;

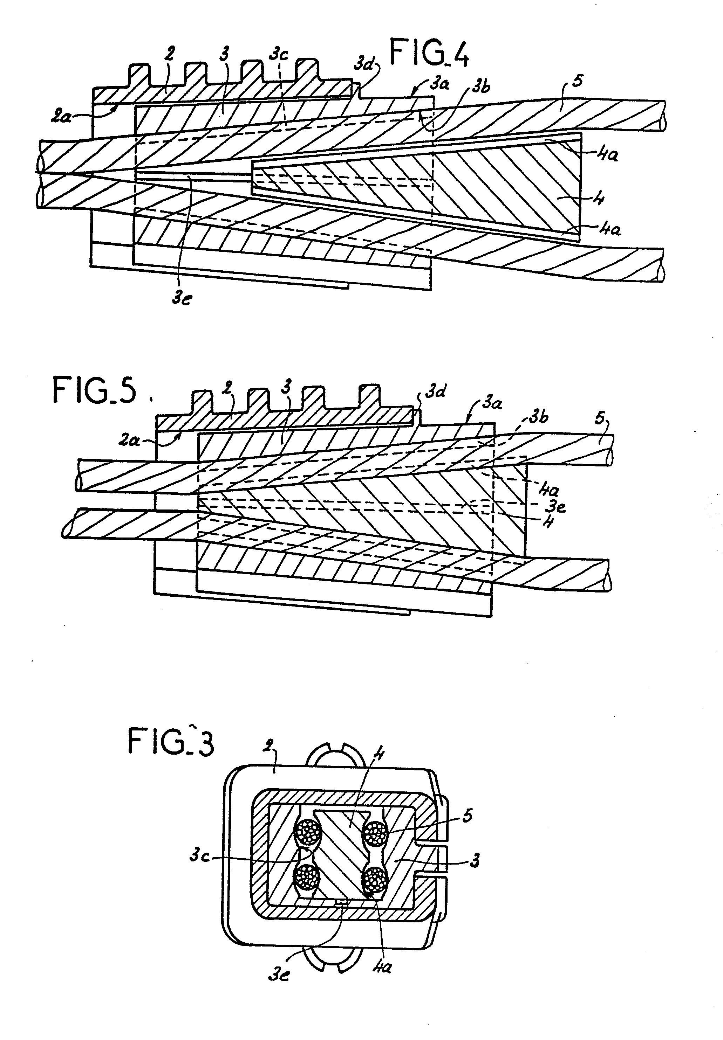

Figures 2 et 3 sont des vues en coupe suivant, respectivement, 2-2 et 3-3 de figure 1 ;

Figures 4 et 5 sont des vues similaires à figure 2, montrant l'engagement du coin central dans le manchon intermédiaire pas encore totalement introduit dans le corps.

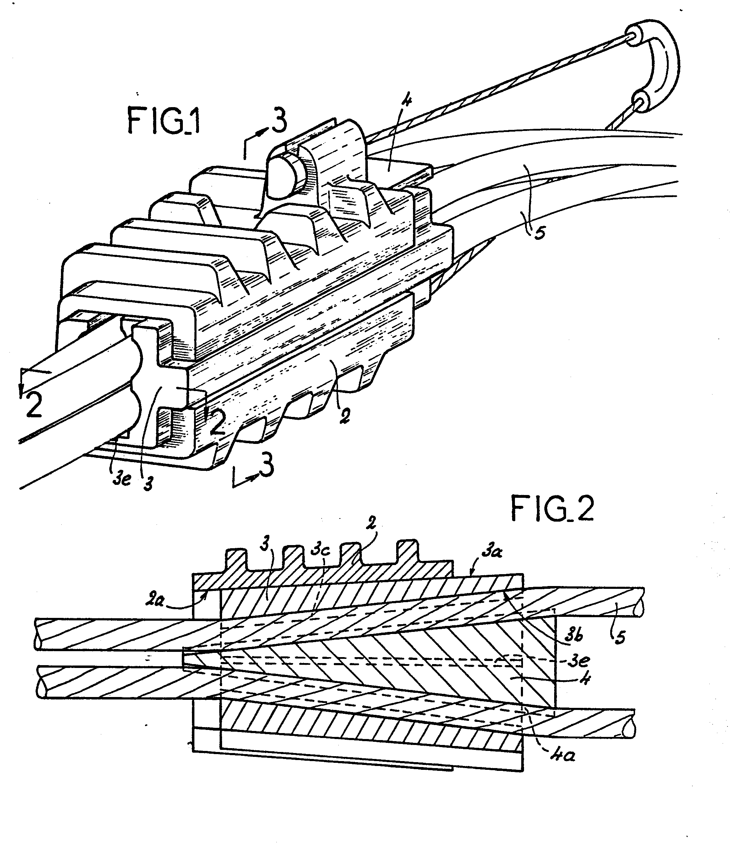

Ainsi que le montre la figure 1, cette pince comprend essentiellement un corps (2) de forme générale en U et délimitant un évidement conique (2a) à faible pente, un manchon intermédiaire conique en forme de U (3) et un coin central (4), les conducteurs (5) du câble étant maintenus entre le coin central (4) et le manchon (3).

Le manchon intermédiaire conique (3) présente, extérieurement, une pente faible (3a) complémentaire de celle de l'évidement conique (2a) du corps (2) et, intérieurement, une pente forte (3b) complémentaire de celle du coin central (4). Il présente, en outre, une paire de gorges (3c) dans chaque face intérieure de ses ailes, gorges destinées à recevoir chacune un conducteur (5) du câble, une languette (3d) extérieure et une rainure intérieure longitudinale (3e) ménagée dans sa paroi de fond. Le coin central (4), de forme également conique, présente dans ses deux faces latérales opposées, deux paires de gorges (4a), chacune de ces gorges coopérant avec l'une des gorges (3c) du manchon (3) pour recevoir un conducteur (5) du câble.

Pour le montage de la pince, le coin central (4) est introduit dans la torsade formée par les conducteurs (5) du câble, ces derniers étant logés dans les gorges (4a) prévues à cet effet. Le coin (4) est ensuite introduit dans le manchon intermédiaire (3), dont l'ouverture permet le passage des conducteurs (5). Le tout, c'est-à-dire l'ensemble formé par le manchon intermédiaire (3), le coin central (4) et les conducteurs (5), est ensuite introduit dans le corps (2) [cf. fig. 4]. L'effort exercé par le monteur fait pénétrer l'ensemble coin central-câble dans le manchon intermédiaire (3) et la languette (3d), venant buter contre la face en bout du corps (2), empêche le manchon (3) de pénétrer davantage dans le corps (2) [cf. fig. 5].

Lors de la mise sous tension mécanique de l'ensemble ainsi monté, la languette (3d) se casse sous l'effet des efforts importants

4

mis en jeu (la tension de la ligne électrique est de l'ordre de 1 000 daN)) et le manchon intermédiaire (3) est entraîné et coulisse dans le corps (2), avec rapprochement de ses deux ailes coniques autorisé par la déformation de la rainure longitudinale (3e), le coin central (4), déjà mis en place à la main, ne pouvant plus progresser [cf. fig. 2]. Les quatre conducteurs (5) du câble sont maintenus entre le coin central (4) et le manchon intermédiaire (3) dans les gorges (4a) et (3c). Le serrage est ainsi provoqué par les pentes faibles (3a) et (2a) respectivement du manchon intermédiaire (3) et du corps (2), et n'est pas susceptible d'être annihilé, même par des efforts importants agissant en sens inverse.

Du fait des fortes pentes, respectivement extérieure et intérieure, du coin (4) et du manchon (3), cette pince peut être utilisée pour l'ancrage de conducteurs (5) de diamètres très différents. ce qui n'implique qu'un décalage axial relativement faible du coin (4) par rapport au manchon intermédiaire (3). Par exemple, la même pince peut servir pour des câbles dont la section des conducteurs varie de 25 à 50 mm².

Comme il va de soi et comme il ressort de ce qui précède, la présente invention ne se limite pas à la seule forme d'exécution de cette pince d'ancrage décrite ci-dessus à titre d'exemple non limitatif ; elle en embrasse. au contraire, toutes les variantes de réalisation et d'application.

5

## - REVENDICATIONS -

1.- Pince d'ancrage pour câbles porteurs isolés à plusieurs conducteurs de lignes aériennes électriques, du type comprenant un corps de section en forme générale de U et délimitant un évidement conique, caractérisée en ce qu'elle comporte, d'une part, un coin central (4) à pente forte présentant, dans deux faces opposées, deux paires de gorges (4a), dont chacune est apte à loger l'un des conducteurs (5) du câble, et, d'autre part, un manchon intermédiaire conique de section en forme générale de U ayant intérieurement une pente forte (3b) complémentaire de celle du coin (4), extérieurement une pente faible (3a) complémentaire de celle du corps (2) et présentant, dans sa paroi de fond, une rainure intérieure longitudinale (3e), les pentes de l'évidement conique (2a) du corps (2), du coin central (4) et du manchon intermédiaire (3) étant orientées dans le même sens.

2.- Pince d'ancrage selon la revendication 1, caractérisée en ce que le manchon intermédiaire (3) porte une languette extérieure (3d) brisable, limitant provisoirement son enfoncement dans le corps (2).

3.- Pince d'ancrage selon l'une quelconque des revendications 1 ou 2, caractérisée en ce que le manchon (3) présente, dans les deux faces intérieures des ailes du U, deux paires de gorges (3c) complémentaires et en regard de celles (4a) du coin central (4).

0132208

FIG.1

FIG.2

0132208

FIG. 4

FIG. 5

FIG. 3

Office européen
des brevets

**RAPPORT DE RECHERCHE EUROPEENNE**

EP  84 42 0098

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | DE-C- 687 212 (PFISTERER) <br> * page 2, lignes 85-98; figure 3 * | 1,3 | H 02 G 7/05 <br> F 16 G 11/04 |
| | --- | | |
| Y | FR-A-2 256 569 (MALEYRE) <br> * page 1, lignes 25-34; figure 2 * | 1,3 | |
| | --- | | |
| A | BE-A- 811 115 (MIETTINEN) <br> * page 5, alinéas 2,3; figure 3 * | 1 | |
| | --- | | |
| A | FR-A- 616 730 (WEST) <br> * page 2, lignes 53-61; figures 2-4 * | 1 | |
| | ----- | | |

| | DOMAINES TECHNIQUES RECHERCHES (Int. Cl. ³) |
|---|---|
| | H 02 G 7/00 <br> F 16 G 11/00 |

Le présent rapport de recherche a été établi pour toutes les revendications

| Lieu de la recherche | Date d'achèvement de la recherche | Examinateur |
|---|---|---|
| LA HAYE | 02-10-1984 | TIELEMANS H.L.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82